# EUROPEAN PATENT APPLICATION

(11) **EP 2 429 248 A1**
(43) Date of publication of application: **14.03.2012**
(21) Application number: 09845728.6
(22) Date of filing: 18.12.2009
(51) Int. Cl.: H04W 68/00

(54) **METHOD AND SYSTEM FOR TELEPHONE NOTIFICATION, SIGNALING MONITOR UNIT AND SERVER**

(30) Priority: 10.06.2009 CN 200910149003
(71) Applicant: ZTE Corporation, Shenzhen, Guangdong 518057 (CN)
(72) Inventor: WANG, Xianguang, Shenzhen Guangdong 518057 (CN); LAI, Tianjian, Shenzhen Guangdong 518057 (CN)
(74) Representative: Kling, Simone
(86) International application number: PCT/CN2009/075741
(87) International publication number: WO 2010/142119

(57) **Abstract**

A telephone notification method and system, a signaling monitoring unit and a server are disclosed. The telephone notification method comprises that: acquiring a hang-up signal of a target user terminal from a signaling network and then sending a notification message to a server; and after receiving the notification message, the server calls the target user terminal when determining there is a telephone notification task for the target user terminal. According to the embodiments of the present invention, a server can timely initiate a telephone notification for the target user, and the success rate of the telephone notification can be increased.

## Description

### TECHNICAL FIELD

The present invention relates to the field of mobile communications, and in particular to a telephone notification method and system, a signaling monitoring unit and a server.

### BACKGROUND

In the current application of intelligent networks, a system may need to initiate a telephone notification for a target user in some cases, for instance, when there is a message in a voice mailbox of the target user, when it is needed to urge the target user to pay a bill, or when an automatic callback is needed from the target user. The target user terminals notified can be classed into mobile terminals and fixed terminals in a specific application.

At present, a system generally tries to call a target user terminal according to a certain rule, for example, a rule according to which the system calls the target user for a certain notification every half an hour and makes no further notification if the total three times of calling are all failed. In the case where the target user terminal is a mobile terminal, the success rate of notification is high since the user carries the mobile terminal with him; however, in the case where the target user terminal is a fixed terminal, a notification may not be successfully delivered if the target user happens to be absent for all three times of attempting calls, or a notification may not be sent to the user in time if the system is unaware that the target user can possibly answer the call during the period in which the two attempting calls are made and therefore sends no notification until the next attempting call time is up.

### SUMMARY

In view of the problems above, certain embodiments of the present invention provide a telephone notification method and system, a signaling monitoring unit and a server to solve the problems of low success rate of telephone notification and untimely notification for the target user existing in the related art.

In accordance with an embodiment of the present invention, a telephone notification method is provided for a server to initiate a telephone notification to a target user terminal.

The telephone notification method comprises: a hang-up signal of a target user terminal is acquired from a signaling network, and then a notification message is sent to a server; and after receiving the notification message, the server calls the target user terminal when determining there is a telephone notification task for the target user terminal.

Preferably, the method further comprises: discarding the received notification message when the server determines there is no telephone notification task for the target user terminal.

Preferably, the above-mentioned telephone notification task comprises at least one of voice mailbox, dunning and automatic callback.

Preferably, the parameters included in the above-mentioned notification message comprise: the identifier of the target user terminal, and/or an indicator indicating the state switching of the target user terminal from the current active state to an idle state.

In accordance with another embodiment of the present invention, a signaling monitoring unit is provided.

The signaling monitoring unit comprises: an acquisition module and a sending module. The acquisition module may be configured to acquire a hand-up signal of a target user terminal from a signaling network; and the sending module is configured to send a notification message to the server according to the hang-up signal acquired by the acquisition module.

In accordance with another embodiment of the present invention, a server is provided for initiating a telephone notification to the target user terminal.

The server comprises: a receiving module and an execution module. The receiving module may be configured to receive a notification message including an indicator indicating the state switching of the target user terminal from the current active state to an idle state; and the execution module may be configured to call the target user terminal to execute a call notification task after the above-mentioned notification message is received by the receiving module.

The server further comprises: a determining module configured to determine whether there is a telephone notification task for the target user terminal and trigger the execution module when determining there is a telephone notification task for the target user terminal.

In accordance with another embodiment of the present invention, a telephone notification system is provided.

The telephone notification system comprises: a signaling monitoring unit and a server. The signaling monitoring unit may be configured to monitor a target user terminal from a signaling network and send a notification message to the server after monitoring a hang-up signal of the target user terminal; and the server may be configured to execute a telephone notification task for the target user terminal after receiving the above-mentioned notification message sent by the signaling monitoring unit.

Preferably, the signaling monitoring unit comprises:
an acquisition module configured to acquire a hand-up signal of the target user terminal from a signaling network; and
a sending module configured to send a notification message to the server according to the hang-up signal acquired by the acquisition module; and
the server comprises:
   a receiving module configured to receive a notification message including an indicator indicating the state switching of the target user terminal from the current active state to an idle state; and
   an execution module configured to call the target user terminal to execute a call notification task after the notification message is received by the receiving module.

Preferably, the parameters included in the notification message include: the identifier of the target user terminal, and/or an indicator indicating the state switching of the target user terminal from the current active state to the idle state.

Preferably, the server further comprises:
a determining module configured to determine whether there is a telephone notification task for the target user terminal and trigger the execution module when determining there is a telephone notification task for the target user terminal.

Through at least one of the above-mentioned solutions of embodiments the present invention in which a hang-up signal of a target user terminal is acquired from a signaling network and a notification message is sent to a server after determining the state switching of the target user terminal from the current active state to an idle state, the server can timely initiate a telephone notification for the target user to increase the success rate of the telephone notification.

Additional features and advantages of embodiments of the present invention are set forth in the description which follows, and in part are apparent from the description, or may be learned by implementing the embodiments of the present invention. The intention and other advantages of the present invention can be realized by and obtained from the structures especially illustrated in the specification, claims and the drawings.

### BRIEF DESCRIPTION OF THE DRAWINGS

Fig. 1 is a flow chart of a telephone notification method according to one embodiment of the present invention;
Fig. 2 is a schematic diagram of the structure of a signaling monitoring unit according to one embodiment of the present invention;
Fig. 3 is a schematic diagram illustrating the position of a signaling monitoring unit in a practical application according to one embodiment of the present invention;
Fig. 4 is a schematic diagram illustrating the structure of a server according to one embodiment of the present invention;
Fig. 5 is a schematic diagram illustrating the structure of a server according to a preferred embodiment of the present invention;
Fig. 6 is a schematic diagram illustrating the architecture of a telephone notification system according to one embodiment of the present invention;
Fig. 7 is a flow chart of embodiment 1; and
Fig. 8 is a flow chart of embodiment 2.

### DETAILED DESCRIPTION

In order to solve the problem existing in the related art that a telephone notification is untimely or low in success rate because a system is incapable of catching the presence time of a target user or the idle time of a target user terminal, an improved telephone notification solution is provided in one embodiment of the present invention. In one embodiment of the present invention, a target user terminal is monitored, when a hang-up signal is sent from the target user terminal, which means that the target user is currently present and able to answer a call, a notification message is sent to a server to indicate the state switching of the target user terminal from the current active state to an idle state, and after receiving the notification message, the server initiates a telephone notification flow if there is a telephone notification task for the target user.

It should be noted that, in the current system, a hang-up signal is generated in an exchanger in a local area network when a target user hangs up, therefore, the hang-up signal of the target user terminal can be acquired by monitoring a signaling network.

The embodiments of the present invention and the features thereof can be combined with each other if no conflict is caused.

The preferred embodiments of the present invention are illustrated in conjunction with the drawings, and it should be appreciated that the preferred embodiments herein are only for illustrating and explaining the present invention but not for limiting the present invention.

In accordance with one embodiment of the present invention, a telephone notification method is provided for a server to initiate a telephone notification to a target user terminal.

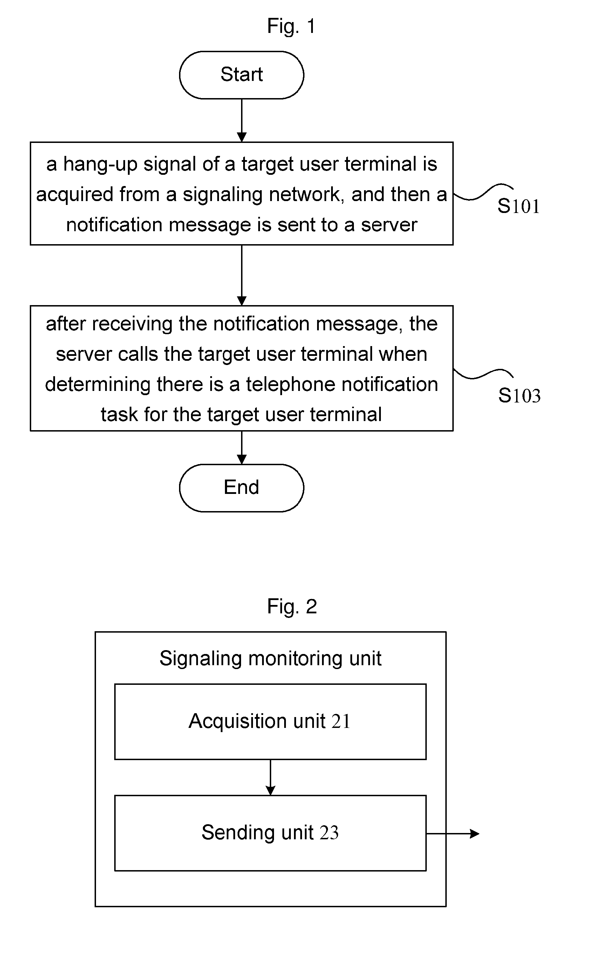

Fig. 1 is a flow chart of a telephone notification method according to one embodiment of the present invention; as shown in Fig. 1, the telephone notification method mainly comprises the following steps (S101 and S103):
S101: a hang-up signal of a target user terminal is acquired from a signaling network, and then a notification message is sent to a server;
during a specific implementation process, a hang-up signal is generated in the signaling network at the moment when a target user hangs up a target terminal, the target user terminal can be determined to be switched to an idle state from the current active state according to the hang-up signal acquired from the signaling network, and then, a notification message is sent to the server;
during a specific implementation process, the identifier, for example, the telephone number of the target user terminal and/or an indicator indicating the switching of the target user terminal from the current active state to an idle state may be included in the notification message, and according to the indicator, the server can acquire the information that the target user terminal is switched to the idle state from the current active state;
in one embodiment of the present invention, the server may comprise: a system for providing a user a voice mailbox, a dunning system, an automatic callback system and other systems for providing a telephone notification for the user; and
S103: after receiving the notification message, the server calls the target user terminal when determining there is a telephone notification task for the target user terminal;
after receiving the notification message, the server checks whether there is a telephone notification task for the target user, calls the target user terminal to initiate a telephone notification when there is a telephone notification task for the target user, or discards the received notification message when there is no telephone notification task for the target user; and
during a specific implementation process, a telephone notification task includes but is not limited to one of voice mailbox, dunning, and automatic callback or any combination thereof.

The telephone notification method provided in one embodiment of the present invention can be used independently or together with existing notification methods based on periodic attempting calls.

The telephone notification method provided in one embodiment of the present invention can notify a server of the time when the target user is available, so that the server can timely initiate a telephone notification to increase the success rate of the telephone notification.

In accordance with one embodiment of the present invention, a signaling monitoring unit is further provided for monitoring a hang-up signal of a target user terminal.

Fig. 2 is a schematic diagram illustrating the structure of a signaling monitoring unit according to one embodiment of the present invention; as shown in Fig. 2, the signaling monitoring unit comprises an acquisition unit 21 and a sending module 23.

The acquisition module 21 may be configured to acquire a hand-up signal of a target user terminal from a signaling network; and
the sending module 23 connected with the acquisition module 21 may be configured to send a notification message to a server according to the hang-up signal acquired by the acquisition module 21. The parameters included in the notification message include but are not limited to the identifier of the target user terminal and/or an indicator indicating the state switching of the target user terminal from the current active state to an idle state.

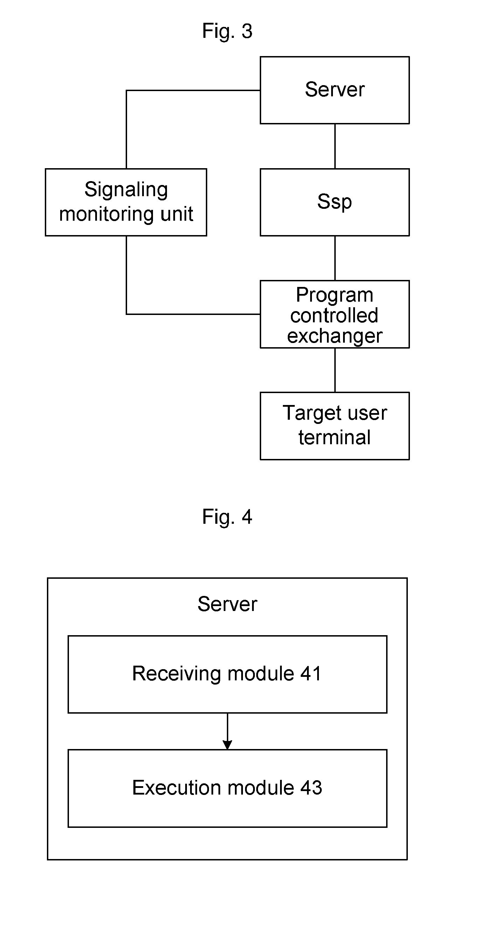

Fig. 3 is a schematic diagram illustrating the position of a signaling monitoring unit in a practical application according to one embodiment of the present invention; as shown in Fig. 3, the signaling monitoring unit may be located between an existing program controlled exchanger and a server (i.e., an application system) to monitor a hang-up signal sent from a target user terminal and send a notification message to the server.

In accordance with one embodiment of the present invention, a server is further provided for executing a telephone notification task.

Fig. 4 is a schematic diagram illustrating the structure of a server according to one embodiment of the present invention; as shown in Fig. 4, the server mainly comprises a receiving module 41 and an execution module 43.

The receiving module 41 may be configured to receive a notification message including an indicator indicating the state switching of the target user terminal from the current active state to an idle state; and
the execution module 43 connected with the receiving module 41 may be configured to call the target user terminal to execute a telephone notification task when the receiving module 41 receives a notification message.

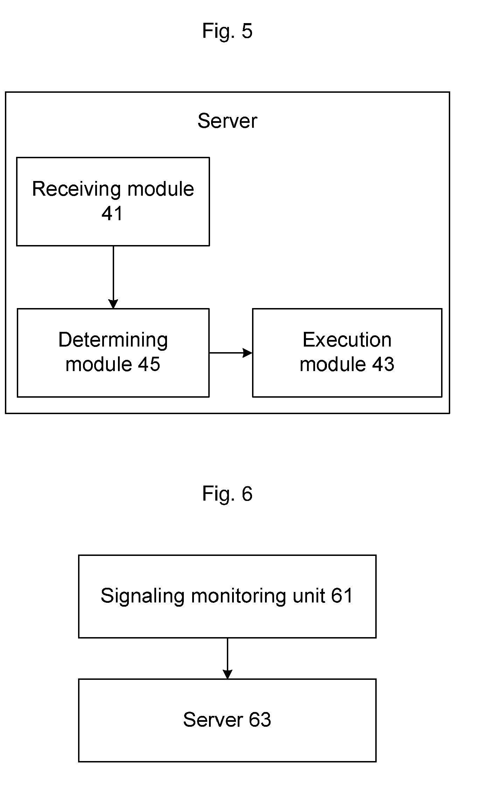

Further, as shown in Fig. 5, the server provided in one embodiment further comprises: a determining module 45 configured to determine whether there is a telephone notification task for the target user terminal and trigger the execution module 43 when determining there is a telephone notification task for the target user terminal.

In accordance with one embodiment of the present invention, a telephone notification system is provided.

Fig. 6 is a schematic diagram illustrating the architecture of a telephone notification system according to one embodiment of the present invention; as shown in Fig. 6, the telephone notification system mainly comprises: a signaling monitoring unit 61 and a server 63.

The signaling monitoring unit 61 may be configured to monitor a target user terminal in a signaling network and send a notification message to the server 63 after monitoring a hang-up signal of the target user terminal; and
the server 63 connected with the signaling monitoring unit 61 via a network may be configured to execute a telephone notification task for the target user after receiving the notification message sent from the signaling monitoring unit 61.

In order to further make the technical solution provided herein understood, the technical solutions provided herein are described through specific embodiments in combination with Fig. 6.

### Embodiment 1

The technical solution provided in this embodiment is described by taking a telephone notification of a voice mailbox as an example.

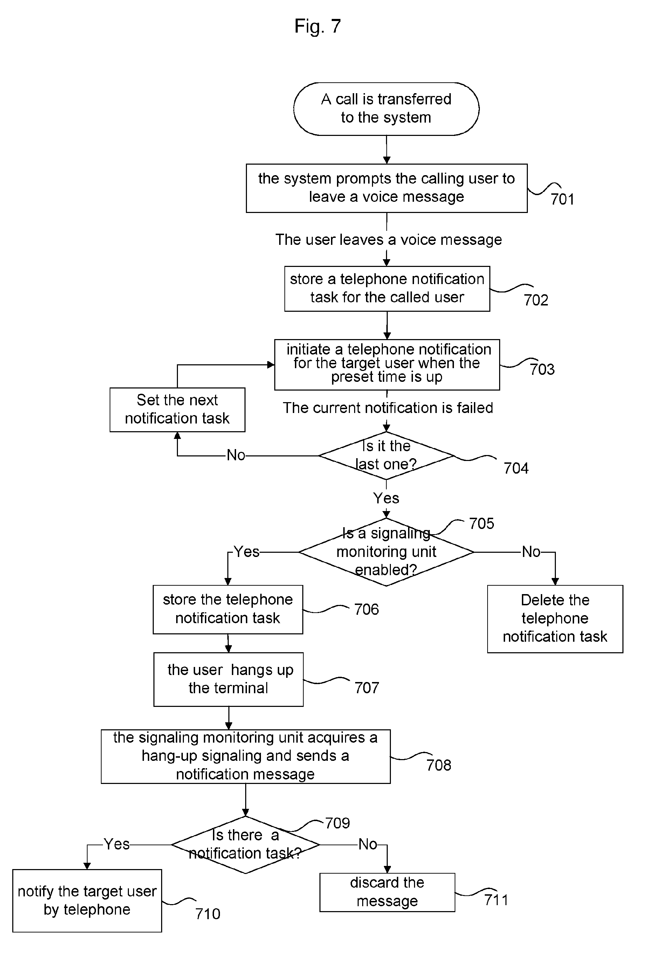

Here, when a user A calls a target user B, the call is transferred to a voice mailbox system since the target user B has no terminal at hand, and Fig. 7 is a flow chart showing a specific realization flow following the transfer of the call to the voice mailbox system; as shown in Fig. 7, in this embodiment, the realization process of the voice mailbox mainly comprises the following steps:
Step 701: the voice mailbox system prompts the user A that it is allowed to leave a message to a target user B in this system, and the user A leaves a voice message with the aid of a voice guide and then hangs up;
Step 702: the voice mailbox system sets and stores a telephone notification task for the target user B, wherein the triggering condition for the telephone notification is as follows: the telephone notification is triggered for the first time one hour later and then for the second time and the third time every half an hour; as a signaling monitoring unit is added, a new triggering condition is added that the telephone notification is also triggered as long as a hang-up of the target user is monitored within two days;
Step 703: the voice mailbox system initiates a telephone notification for the target user B when the preset time is up; this telephone notification is a failed one if the target user B has no terminal at hand;
Step 704: the voice mailbox system determines whether the current attempting call is the last one, if yes, executes Step 705; otherwise, the voice mailbox system sets the next telephone notification task, and returns to execute Step 703;
Step 705: the voice mailbox system determines whether the system enables the signaling monitoring unit, if yes, executes Step 706; otherwise, deletes the telephone notification task and ends the flow, and the telephone notification is finally failed;
Step 706: the voice mailbox system stores the telephone notification task and synchronously stops calling attempts;
Step 707: the target user answers or makes another call after coming back home and hangs up after the call;
Step 708: the hang-up event of the target user is transmitted over No.7 signaling network and captured by the signaling monitoring unit; and the signaling monitoring unit monitors the hang-up signaling of the target user, considers that the user is switched to an idle state from an active state, and sends a notification message to the voice mailbox system;
Step 709: the voice mailbox system checks its own telephone notification waiting tasks to check whether there is a telephone notification task for the target user, if yes, executes Step 710; otherwise, executes Step 711;
Step 710: the voice mailbox system initiates a telephone notification for the target user; this notification succeeds if the target user answers the call; and
Step 711: the voice mailbox system discards the received notification message.

If technologies in the related art are adopted, a notification solution fails when the user is not at home in an original notification period. Since a signaling monitoring unit is added this embodiment, a system can monitor the reuse of a telephone by a target user when the target user comes back home to use the telephone and a telephone notification can therefore be performed in time to produce a successful telephone notification.

### Embodiment 2

The technical solution provided herein is described in detail by taking a telephone notification of an automatic callback service as an example.

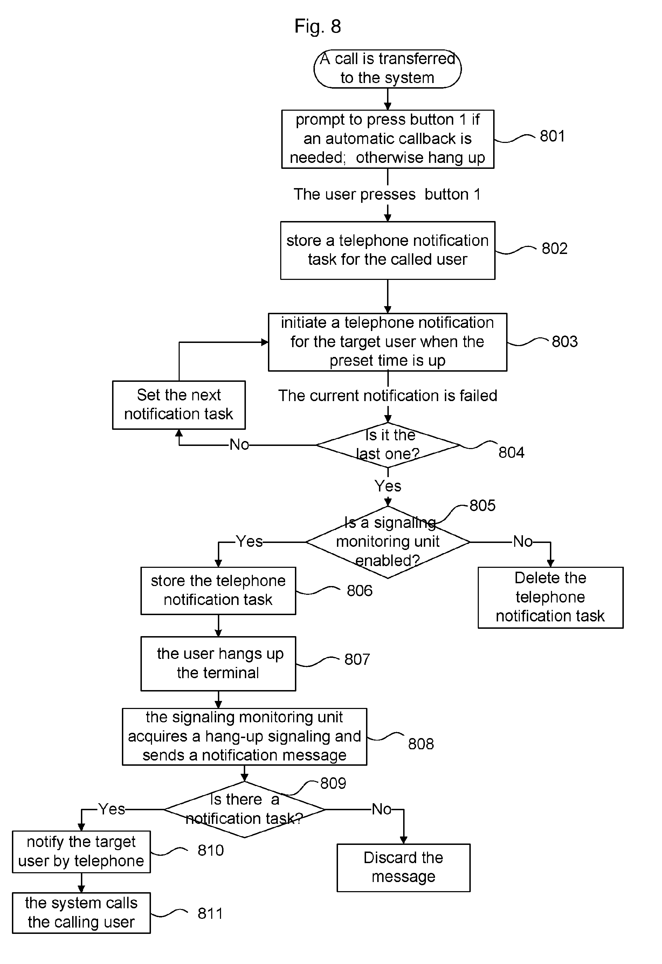

In this embodiment, when a user A calls a target user B, the call is transferred to an automatic callback system (corresponding to the aforementioned server) because the target user B currently has no terminal at hand or is currently using the terminal, and Fig. 8 is a schematic diagram illustrating a flow following the transfer of a call to an automatic callback system; as shown in Fig. 8, after the call is transferred to an automatic callback system, the following steps are mainly performed:
Step 801: an automatic callback system prompts a user A to press button 1 if needing an automatic callback or to hang up, if the user A selects an automatic callback, i.e., presses the button 1, and then execute Step 802;
Step 802: the automatic callback system sets a telephone notification task for a target user B, wherein the triggering condition for the telephone notification is as follows: the telephone notification is triggered for the first time one hour later and then for the second time and the third time every half an hour; since a signaling monitoring unit is added, a new triggering condition is added that the telephone notification is also triggered as long as a hang-up of the target user is monitored within two days;
Step 803: the automatic callback system initiates a telephone notification for the target user B when the preset time is up; this telephone notification is failed one if the target user B has no terminal at hand;
Step 804: the automatic callback system determines whether the current attempting call is the last one, if yes, executes Step 805; otherwise, the automatic callback system sets the next telephone notification task, and returns to execute Step 803;
Step 805: the automatic callback system determines whether the system enables the signaling monitoring unit, if yes, executes Step 806; otherwise, deletes the telephone notification task and ends the flow, and the telephone notification is finally failed;
Step 806: the automatic callback system stores the telephone notification task and stops calling attempt;
Step 807: the target user answers or makes another call after coming back home and hangs up after the call;
Step 808: the hang-up event of the target user is transmitted over No.7 signaling network and captured by the signaling monitoring unit; and the signaling monitoring unit monitors the hang-up signaling of the target user, considers that the user is switched to an idle state from an active state and sends a notification message to the automatic callback system;
Step 809: the automatic callback system checks its own telephone notification waiting tasks to check whether there is a telephone notification task for the target user, if yes, executes Step 810; otherwise, discards the received notification message;
Step 810: the automatic callback system initiates a telephone notification for the target user, and the target user answers the telephone; and
Step 811: the automatic callback system initiates a call for the user A, and the user A answers the call, then the automatic callback flow is completed.

As stated above, by means of the technical solution provided in the embodiment of the present invention, a signaling monitoring unit is added to monitor the hang-up signaling of a target user and determining whether the target user terminal is switched to an idle state from an active state or whether the user has an available terminal, so that a telephone notification is triggered for the target user and the success rate of the telephone notification is increased. Moreover, since the system can initiate a telephone notification once the target user is available, the efficiency of the telephone notification is guaranteed and user experience is improved.

The mentioned above is only preferred embodiments of the present invention but not intended to limit the present invention, various modification and variations may be made by those skilled in the art, and it should be understood that any modification, equivalent and improvement made without departing from the spirit and scope of the present invention belong to the protection scope of the present invention.

## Claims

1. A telephone notification method for a server to initiate a telephone notification to a target user terminal, comprising:
acquiring a hang-up signal of the target user terminal from a signaling network, and then sending a notification message to the server; and
after receiving the notification message, the server calling the target user terminal when determining there is a telephone notification task for the target user terminal.

2. The method according to claim 1, further comprising: discarding the received notification message when determining there is no telephone notification task for the target user terminal.

3. The method according to claim 1 or 2, wherein the telephone notification task comprises at least one of voice mailbox, dunning and automatic callback.

4. The method according to claim 1 or 2, wherein the notification message includes parameters which include: an identifier of the target user terminal and/or an indicator indicating a state switching of the target user terminal from a current active state to an idle state.

5. A signaling monitoring unit, comprising:
an acquisition module configured to acquire a hand-up signal of a target user terminal from a signaling network; and
a sending module configured to send a notification message to a server according to the hang-up signal acquired by the acquisition module.

6. The signaling monitoring unit according to claim 5, wherein the notification message includes parameters which include: an identifier of the target user terminal and/or an indicator indicating a state switching of the target user terminal from a current active state to an idle state.

7. A server for initiating a telephone notification to a target user terminal, comprising:
a receiving module configured to receive a notification message including an indicator indicating a state switching of the target user terminal from a current active state to an idle state; and
an execution module configured to call the target user terminal to execute a call notification task after the notification message is received by the receiving module.

8. The server according to claim 7, further comprising:
a determining module configured to determine whether there is a telephone notification task for the target user terminal and trigger the execution module when determining there is a telephone notification task for the target user terminal.

9. A telephone notification system, comprising:
a signaling monitoring unit configured to monitor a target user terminal in a signaling network and send a notification message to a server after monitoring a hang-up signal of the target user terminal; and
a server configured to execute a telephone notification task for the target user terminal after receiving the notification message sent by the signaling monitoring unit.

10. The telephone notification system according to claim 9, wherein the signaling monitoring unit comprises:
an acquisition module configured to acquire a hand-up signal of the target user terminal from a signaling network; and
a sending module configured to send a notification message to the server according to the hang-up signal acquired by the acquisition module; and
the server comprises:
a receiving module configured to receive a notification message including an indicator indicating a state switching of the target user terminal from a current active state to an idle state; and
an execution module configured to call the target user terminal to execute the call notification task after the notification message is received by the receiving module.

11. The telephone notification system according to claim 10, wherein the notification message includes parameters which include: an identifier of the target user terminal and/or an indicator indicating the state switching of the target user terminal from the current active state to the idle state.

12. The telephone notification system according to claim 10, wherein the server further comprises:
a determining module configured to determine whether there is a telephone notification task for the target user terminal and trigger the execution module when determining there is a telephone notification task for the target user terminal.
